**Europäisches Patentamt**

(19) **European Patent Office**

**Office européen des brevets**

(11) Veröffentlichungsnummer: **0 068 150**
**B1**

(12) # EUROPÄISCHE PATENTSCHRIFT

(45) Veröffentlichungstag der Patentschrift:
**09.05.84**

(51) Int. Cl.³: **H 04 L 25/16, H 04 J 3/16** •

(21) Anmeldenummer: **82104611.7**

(22) Anmeldetag: **27.05.82**

(54) **Anordnung zur wechselseitigen Umsetzung der Abtastfrequenz von n zeitdiskreten oder digitalen Signalen.**

(30) Priorität: **23.06.81 DE 3124518**

(43) Veröffentlichungstag der Anmeldung:
**05.01.83 Patentblatt 83/1**

(45) Bekanntmachung des Hinweises auf die Patenterteilung:
**09.05.84 Patentblatt 84/19**

(84) Benannte Vertragsstaaten:
**BE CH DE FR GB IT LI NL SE**

(56) Entgegenhaltungen:
**FR - A - 2 194 076**

**IEEE PROCEEDINGS OF THE INTERNATIONAL CONFERENCE ON ACOUSTICS, SPEECH AND SIGNAL PROCESSING, Band 69, Nr.3, 30,31. März 1981, Atlanta, N.J., W. LAGADEC et al.: "A universal, digital sampling frequency converter for digital audio", Seiten 595-598 TIJDSCHRIFT VAN HET NEDERLANDS RADIOGENOOTSCHAP, Band 27, Nr.6, 1962, Leidschendam (NL), J.H. KLEINJAN: "Het vermenigvuldigen van een gegeven frequentie met een rationaal getal", Seiten 275-285**

(73) Patentinhaber: **ANT Nachrichtentechnik GmbH, Gerberstrasse 33, D-7150 Backnang (DE)**

(72) Erfinder: **Göckler, Heinz, Dipl.-Ing., Elbinger Strasse 52, D-7150 Backnang (DE)**

(74) Vertreter: **Schickle, Gerhard, Dipl.-Ing. et al, ANT Nachrichtentechnik GmbH Patent- und Lizenzabteilung Gerberstrasse 33, D-7150 Backnang (DE)**

## Beschreibung

Die Erfindung betrifft eine Anordnung gemäss dem Oberbegriff des Anspruchs 1.

Solche Anordnungen werden z.B. als Schnittstelleneinrichtungen zur Anpassung (Interpolation, Synchronisation) zeitdiskreter oder digitaler Signale mit unterschiedlicher Abtastfrequenz benutzt.

Einzelumsetzungen von einer Abtastfrequenz $f_{A1}$ in eine andere $f_{A2}$ und umgekehrt sind bekannt aus

[1] DE-OS 30 47 450
[2] R. E. Crochiere und L. R. Rabiner,
«Interpolation and Decimation of Digital Signals – A Tutorial Review»,
Proceedings of the IEEE, Vol. 69, No. 3,
March 1981, S. 300–331
[3] R. Lagadec, H. O. Kunz
«A New Approach to Digital Sampling Frequency Conversion»,
AES Audio Engineering Society Preprint,
presented at the 68th Convention
17.–20. March 1981 Hamburg.

Dabei kann in [1], [2] und [3] durch Parameterumschaltung die Abtastfrequenz $f_{A1}$ und $f_{A2}$ weitgehend frei gewählt werden. Es sind aber keine Mehrfachumsetzungen möglich. Um eine Mehrfachumsetzung zu erreichen, muss für jedes vorgegebene Verhältnis $f_{A1}/f_{A2}$ eine Einzelumsetzungseinrichtung realisiert werden. Bei [3] sind Interpolationsfehler nicht auszuschliessen, und ausserdem ist eine sehr hohe Verarbeitungsgeschwindigkeit erforderlich.

Der Erfindung liegt die Aufgabe zugrunde, eine Anordnung zur wechselseitigen Umsetzung der Abtastfrequenz anzugeben, mit der es möglich ist, eine Abtastfrequenz gleichzeitig in mehrere andere Abtastfrequenzen umzusetzen und Signale mit unterschiedlichen Abtastfrequenzen zu mischen. Dabei sollen Interpolationsfehler und sehr hohe Verarbeitungsgeschwindigkeiten vermieden werden, und eine Realisierung der Anordnung soll mit geringerem Aufwand als bisher möglich sein.

Die Aufgabe wird als gelöst wie im Anspruch 1 beschrieben. Die Unteransprüche geben vorteilhafte Weiterbildungen an.

Im folgenden sei die Erfindung beispielhaft anhand von Figuren näher erläutert.

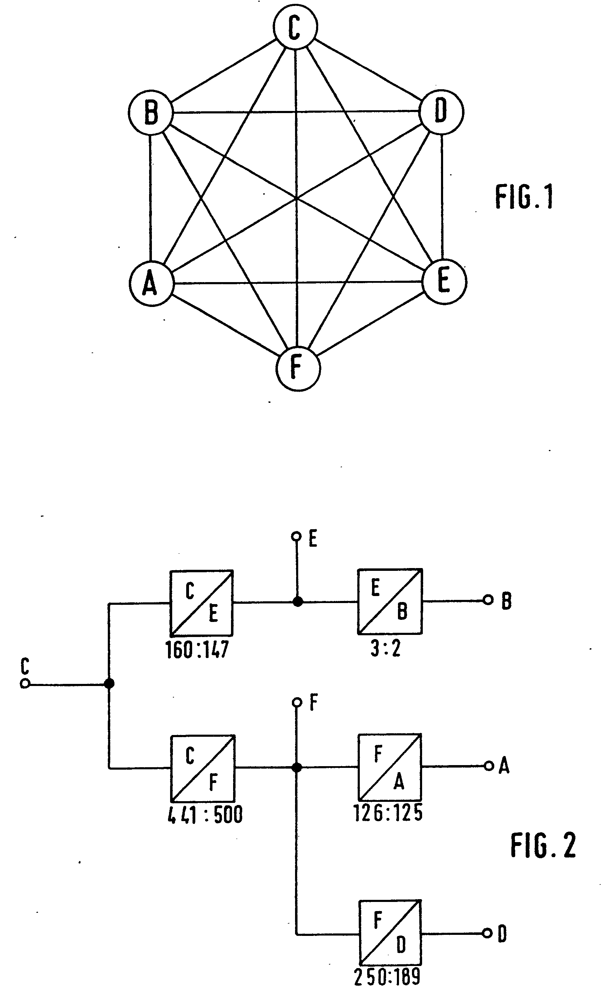

Figur 1 zeigt ein Maschennetz für n = 6 Abtastfrequenzen aus dem Bereich der digitalen Tonstudiotechnik. Dabei seien die häufigsten Abtastfrequenzen z.B.

A = 50,4 kHz,  B = 32 kHz,  C = 44,1 kHz
D = 47,25 kHz,  E = 48 kHz,  F = 50 kHz.

Die Anzahl aller dabei möglichen Umsetzungsverhältnisse ergibt sich zu:

$$K = \sum_{i=1}^{n} (n-i) = \sum_{i=1}^{6} (6-i) = 15.$$

Im einzelnen sind dies:

A:B = 63: 40    B:C = 441:320    C:E = 160:147
A:C =  8:  7    B:D = 189:128    C:F = 441:500
A:D = 16: 15    B:E =   3:  2    D:E =  63: 64
A:E = 21: 20    B:F =  25: 16    D:F = 250:189
A:F = 126:125   C:D =  15: 14    E:F =  25: 24

Erfindungsgemäs müssen aber nur 5 von diesen 15 Umsetzungsverhältnissen realisiert werden. Die restlichen 10 ergeben sich durch eine Kaskadenschaltung der Einzeleinrichtungen.

So zeigt Figur 2 eine mögliche Realisierung eines solchen Netzwerkes. Dabei ist darauf zu achten, dass der Aufwand für die Einzeleinrichtungen um so grösser ist, je grösser die Faktoren $I_v$ und $m_v$ sind; denn je grösser $I_v$ und $m_v$ sind, desto mehr Filterkoeffizienten sind vorzusehen.

Die Figur 3 zeigt das zu Figur 2 gehörende Maschennetz. Die durchgezogene Linie bedeutet dabei, dass diese Umsetzung durch eine Einzeleinrichtung zur Umsetzung der Abtastfrequenz realisiert ist. Die gestrichelte Linie bedeutet, dass diese Umsetzung durch Kaskadenschaltung der entsprechenden realisierten Einzeleinrichtungen erfolgt.

Die Figur 4 zeigt eine der aufwandsgünstigeren Realisierungen gemäss Anspruch 2.

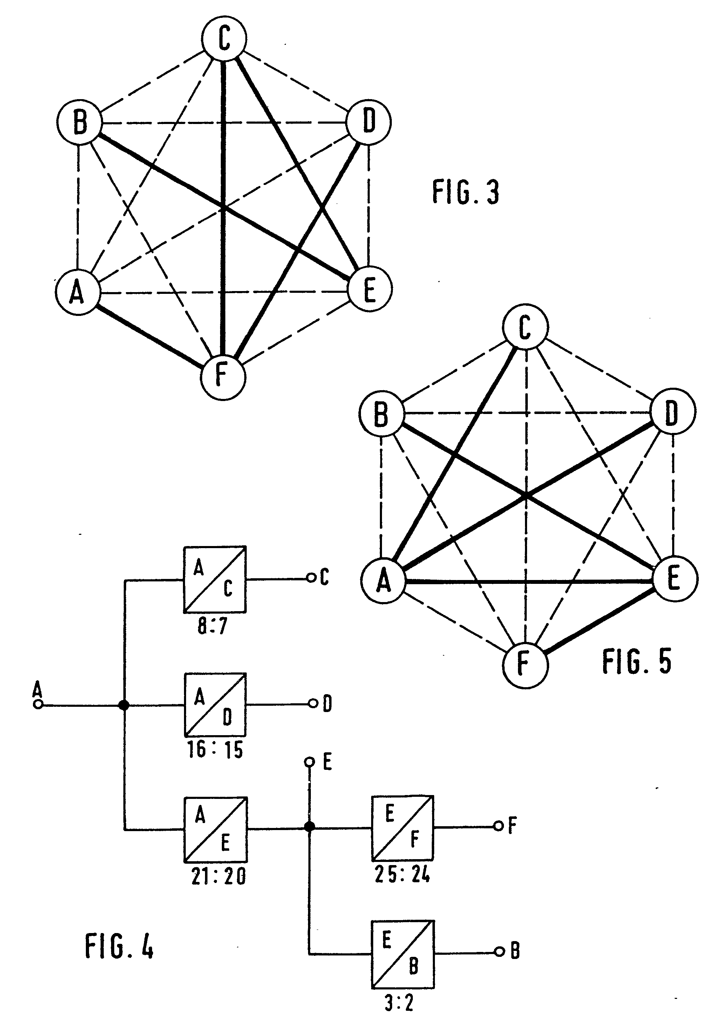

Anhand von Figur 4 sei erläutert, wie die erfindungsgemässe Einrichtung zur Abtastfrequenzänderng zur Mischung von Signalen verwendet werden kann, die mit unterschiedlicher Abtastfrequenz angeliefert werden. Wird in Figur 4 z.B. der Block A/C in Richtung C → A und der Block A/D in Richtung D → A betrieben, so überlagern sich (mischen sich) das eine ursprünglich mit C abgetastete Signal und das andere ursprünglich mit D abgetastete Signal an dem auf die Abtastfrequenz A bezogenen Summenpunkt. In Ausgestaltung dieser Möglichkeit können zusätzliche zeitdiskrete oder digitale Regler zur Amplitudenbewertung vorgesehen werden.

Wie bei der Aufgabenstellung beschrieben, kann ein Signal gleichzeitig auf mehrere unterschiedliche Abtastfrequenzen umcodiert werden, wie aus Figur 4 z.B. unmittelbar ersichtlich ist. Vor allem in diesem Fall ist es sinnvoll, den Takt der gesamten Anordnung von einem der einlaufenden Signale abzuleiten. Dazu wird man das Eingangssignal auswählen, dessen Abtastfrequenz selbst nicht synchronisierbar ist.

Die Figur 5 zeigt das zu Figur 4 gehörende Maschennetz.

## Patentansprüche

1. Anordnung zur wechselseitigen Umsetzung der Abtastfrequenz von n (n ∈ N, N = Menge der natürlichen Zahlen) zeitdiskreten oder digitalen Signalen, wobei alle Signale mit unterschiedlicher Abtastfrequenz angeliefert werden, wobei alle

$$K = \sum_{i=1}^{n} (n-1) \cdot$$

möglichen Abtastfrequenzverhältnisse durch Quotienten $1_\nu/m_\nu$ darstellbar sind wobei $l_\nu$, $m_\nu \in N$ und $l_\nu$, $m_\nu$ für alle $\mu = 1, 2, 3, \ldots$ K gilt und ferner mindestens für einen Wert $_\nu \in \{ 1, 2, 3, \ldots, K \}$ weder $l_\nu/m_\nu$ noch $m_\nu/l_\nu$ eine ganze Zahl ist, dadurch gekennzeichnet, dass n–1 Einzeleinrichtungen zur wechselseitigen Abtastfrequenzumsetzung um den Faktor $l_\nu/m_\nu$ in Vorwärtsrichtung bzw. um den Faktor $m_\nu/l_\nu$ in Rückrichtung mit $_\nu = $ ' 1, 2, 3, . . . , n–1 so zu einem Netzwerk zusammengeschaltet sind, dass die wechselseitige Abtastfrequenzumsetzung der verbleibenden K – (n–1) Signale jeweils über eine Kaskadenschaltung von mindestens zwei Einzeleinrichtungen zur Abtastfrequenzumsetzung erfolgt.

2. Anordnung nach Anspruch 1, dadurch gekennzeichnet, dass für die Einzeleinrichtungen zur wechselseitigen Abtastfrequenzumsetzung jeweils die Verhältnisse mit den kleinstmöglichen Werten für $l_\nu$ und $m_\nu$ gewählt werden.

3. Anordnung nach Anspruch 1 oder 2, dadurch gekennzeichnet, dass an den Knotenpunkten wahlweise jeweils eine regelbare oder nichtregelbare Mischvorrichtung vorgesehen ist.

4. Anordung nach einem oder mehreren der vorhergehenden Ansprüche, dadurch gekennzeichnet, dass alle Einzeleinrichtungen zur wechselseitigen Umsetzung der Abtastfrequenz und alle Mischvorrichtungen mit digitalen Schaltungsmittels realisiert sind.

5. Anordnung nach einem oder mehreren der vorhergehenden Ansprüche, dadurch gekennzeichnet, dass die Einzeleinrichtungen zur wechselseitigen Umsetzung der Abtastfrequenz und die Mischvorrichtungen die einlaufenden Signale zeitdiskret verarbeiten.

6. Anordnung nach einem oder mehreren der vorhergehenden Ansprüche, dadurch gekennzeichnet, dass alle Abtastfrequenzen von der Abtastfrequenz eines einlaufenden Signals ableitbar sind.

## Claims

1. Arrangement for the reciprocal conversion of the scanning frequency of n(n $\in$ N, N = quantity of the natural numbers) signals, which are discrete in time or digital, wherein all signals are supplied at different scanning frequency, wherein all

$$K = \sum_{i=1}^{n}$$

(n–1) possible scanning frequency ratios are representable by quotients $l_\nu/m_\nu$, wherein $l_\nu$, $m_\nu$, $\in N$ and $l\nu \neq m_\nu$ applies for all $\nu= 1, 2, 3, \ldots$ K and furthermore neither $l_\nu/m_\nu$ nor $m_\nu/l_\nu$ is a whole number for at least one value $\nu \in \{ 1, 2, 3, \ldots, K\}$, characterised thereby, that n–1 individual equipments for the reciprocal conversion of the scanning frequency by the factor $l_\nu/m_\nu$ in forward direction or by the factor $m_\nu/l_\nu$ in reverse direction $\nu$ = 1, 2, 3, . . ., n–1 are so connected together into a network that the reciprocal conversion of the scanning frequency of the remaining K – (n–1) signals takes place each time through a cascade connection of at least two individual equipments for the reciprocal conversion of the scanning frequency.

2. Arrangement according to claim 1, characterised thereby, that the ratios with the smallest possible values for $l_\nu$ and $m_\nu$ are chosen each time for the individual equipments for the reciprocal conversion of the scanning frequency.

3. Arrangement according to claim 1 or 2, characterised thereby, that a respective regulable or non-regulable mixer device is selectably provided at the junctions.

4. Arrangement according to one more of the preceding claims, characterised thereby, that all individual equipments for the reciprocal conversion of the scanning frequency and all mixer devices are realised by digital circuit means.

5. Arrangement according to one or more of the preceding claims, characterised thereby, that the individual equipments for the reciprocal conversion of the scanning frequency and the mixer devices process the incoming signals discretely in time.

6. Arrangement according to one more of the preceding claims, characterised thereby, that all scanning frequencies are derivable from the scanning frequency of an incoming signal.

## Revendications

1. Dispositif de transposition réciproque de la fréquence d'échantillonnage de n (n $\in$ N, N = ensemble des nombres naturels) signaux échantillonnés ou numériques, tous les signaux étant fournis à une fréquence d'échantillonnage différente et les

$$K = \sum_{i=1}^{n} (n-1)$$

rapports possibles des fréquences d'échantillonnage pouvant être représentées par des quotients $n_\nu/m_\nu$ avec $l_\nu$, $m_\nu \in N$ et $l_\nu \neq m_\nu$ valables pour tous les $\nu = 1, 2, 3, \ldots$ K et en outre ni $l_\nu/m_\nu$, ni $m_\nu/l_\nu$ n'étant un nombre entier pour au moins une valeur $\nu \in \{ 1, 2, 3, \ldots K\}$ ledit dispositif étant caractérisé en ce que n–1 dispositifs individuels sont interconnectés pour former un réseau de transposition réciproque des fréquences d'échantillonnage de facteur $l_\nu/m_\nu$ dans le sens aller ou de facteur $m_\nu/l_\nu$ dans le sens retour, avec $\nu$ = 1, 2, 3,. . . n–1, de façon que la transposition réciproque de la fréquence d'échantillonnage des K – (n–1) signaux restants s'effectue toujours par un montage en cascade d'au moins deux dispositifs individuels de transposition de fréquence d'échantillonnage.

2. Dispositif selon revendication 1, caractérisé en ce que les rapports pour les dispositifs individuels de transposition réciproque de la fréquence d'échantillonnage sont toujours choisis avec les valeurs minimales de $l_v$ et $m_v$.

3. Dispositif selon une des revendications 1 ou 2, caractérisé en ce qu'un dispositif mélangeur réglable ou non est prévu à chaque nœud.

4. Dispositif selon une quelconque des revendications 1 à 3, caractérisé en ce que tous les dispositifs individuels de transposition réciproque de la fréquence d'échantillonnage et tous les dispositifs mélangeurs sont réalisés à l'aide de moyens numériques.

5. Dispositif selon une quelconque des revendications 1 à 4, caractérisé en ce que les dispositifs individuels de transposition réciproque de la fréquence d'échantillonnage et les dispositifs mélangeurs traitent les signaux entrants avec échantillonnage.

6. Dispositif selon une quelconque des revendications 1 à 5, caractérisé en ce que toutes les fréquences d'échantillonnage sont dérivées de la fréquence d'échantillonnage d'un signal entrant.

FIG.1

FIG.2

0 068 150

FIG. 3

FIG. 5

FIG. 4

7